# EUROPÄISCHE PATENTSCHRIFT

(11) **EP 2 307 682 B1**
(45) Veröffentlichungstag und Bekanntmachung des Hinweises auf die Patenterteilung: **02.11.2011**
(21) Anmeldenummer: 09780518.8
(22) Anmeldetag: 13.07.2009
(51) Int. Cl.: F02B 29/08

(54) **VENTILEINRICHTUNG FÜR EINE BRENNKRAFTMASCHINE SOWIE BRENNKRAFTMASCHINE**
VALVE UNIT FOR AN INTERNAL COMBUSTION ENGINE AND INTERNAL COMBUSTION ENGINE
DISPOSITIF DE SOUPAPE POUR UN MOTEUR À COMBUSTION INTERNE ET MOTEUR À COMBUSTION INTERNE

(30) Priorität: 18.07.2008 DE 102008033885; 06.11.2008 DE 102008056199
(43) Veröffentlichungstag der Anmeldung: 13.04.2011
(73) Patentinhaber: Mahle International GmbH, 70376 Stuttgart (DE)
(72) Erfinder: ELSÄSSER, Alfred, 75210 Keltern (DE); GRASS, Uwe, 70569 Stuttgart (DE); MAHR, Bernd, 73207 Plochingen (DE); WARTH, Marco, 73614 Schorndorf (DE)
(74) Vertreter: BRP Renaud & Partner
(86) Internationale Anmeldenummer: PCT/EP2009/058929
(87) Internationale Veröffentlichungsnummer: WO 2010/007026

(56) Entgegenhaltungen:
- EP-A1- 1 882 848
- EP-A2- 1 705 351
- DE-A1- 10 153 478
- GB-A- 2 180 298
- JP-A- 4 047 123
- JP-A- 56 113 006
- US-A- 5 105 784

## Beschreibung

Die vorliegende Erfindung betrifft eine Ventileinrichtung zum Beeinflussen und/oder Steuern einer Gasströmung bei einer Brennkraftmaschine, insbesondere eines Kraftfahrzeugs. Die Erfindung betrifft außerdem eine Brennkraftmaschine mit wenigstens einer solchen Ventileinrichtung.

Ventileinrichtungen zum Beeisflassen und/oder Steuern einer Gasströmmung bei einer Brennkraftmaschine sind aus EP/1 705 351 A2, US 5 105 784 A1, GB 2 180 298 A und JP 04047123 A bekannt.

Ventileinrichtungen weisen üblicherweise ein Ventilglied auf, mit dessen Hilfe ein durchströmbarer Querschnitt eines eine Gasströmung führenden Kanals verändert werden kann. Dabei kann das Ventilglied diskontinuierlich betätigt werden, um es zwischen diskreten Schaltstellungen verstellen zu können. Bei Erreichen derartiger diskreter Schaltstellungen muss das Ventilglied gestoppt werden. Um in eine andere Schaltstellung überführt zu werden, muss das Ventilglied entsprechend beschleunigt werden. Bei kurzen Schaltzeiten und/oder bei kurzen Abständen zwischen aufeinanderfolgenden Schaltvorgängen wird vergleichsweise viel Energie zum Abbremsen und Beschleunigen des Ventilglieds benötigt. Eine hierfür geeignete Antriebseinrichtung besitzt einen vergleichsweise aufwendigen Aufbau und kann dementsprechend teuer sein.

Alternativ kann ein derartiges Ventilglied auch kontinuierlich betätigt werden. Beispielsweise rotiert das Ventilglied um eine Achse und durchfährt dabei pro Umdrehung unterschiedliche Schaltzustände. Ein solches Ventilglied kann permanent angetrieben sein. Durch Variieren der Rotationsgeschwindigkeit lassen sich dabei unterschiedliche Schaltfrequenzen bzw. Schaltzeiten realisieren.

Eine Ventileinrichtung der eingangs genannten Art kann bei einem Kraftfahrzeug zum Einstellen einer Abgasrückführrate verwendet werden. Dabei kann das zugehörige Ventilglied in einem Frischluftpfad der Brennkraftmaschine angeordnet sein, um durch periodisches Öffnen und Schließen des durchströmbaren Querschnitts Druckschwingungen zu erzeugen bzw. zu verstärken, mit deren Hilfe die Abgasrückführrate einstellbar ist. Durch die mit Hilfe der Ventileinrichtung im Frischluftpfad erzeugten Druckschwingungen werden unter anderem auch Schwingungsphasen mit einem vergleichsweise niedrigen Druck erzeugt, die ein Überströmen von Abgas aus einer Rückführleitung in den Frischluftpfad ermöglichen bzw. erleichtern. Insbesondere kann dadurch auch eine Abgasrückführung auf der Druckseite einer Ladeeinrichtung bei einer aufgeladenen Brennkraftmaschine erreicht werden.

Zusätzlich oder alternativ kann eine solche Ventileinrichtung auch in einer Rückführleitung angeordnet sein, um mit Hilfe des Ventilglieds durch periodisches Öffnen und Schließen des durchströmbaren Querschnitts Druckschwingungen zu erzeugen bzw. zu verstärken. Diese Druckschwingungen besitzen Schwingungsphasen mit einem relativ hohen Druck, die ein Überströmen des Abgases von der Rückführungsleitung in einen Frischgaspfad ermöglichen bzw. erleichtern. Auch hierbei kann eine Anwendung bei einer aufgeladenen Brennkraftmaschine realisiert werden, bei welcher das rückgeführte Abgas in die Hochdruckseite des Frischluftpfads eingeleitet wird.

Die vorliegende Erfindung beschäftigt sich mit dem Problem, für eine Ventileinrichtung der eingangs genannten Art bzw. für eine damit ausgestattete Brennkraftmaschine eine vorteilhafte Ausführungsform anzugeben, die sich insbesondere dadurch auszeichnet, dass sie vergleichsweise preiswert realisierbar ist und/oder dass sie eine verbesserte Funktionalität besitzt.

Dieses Problem wird erfindungsgemäß durch die Gegenstände des unabhängigen Ansprüchs gelöst. Vorteilhafte Ausführungsformen sind Gegenstand der abhängigen Ansprüche.

Die Erfindung beruht auf dem allgemeinen Gedanken, bei einer Ventileinrichtung mit permanent angetriebenem Ventilglied in einem Antriebsstrang zum drehenden Antreiben des Ventilglieds zwischen einer drehend angetriebenen Antriebswelle und einer das Ventilglied antreibenden Ventilgliedwelle einen Phasesteller anzuordnen, und zwar derart, dass eine relative Drehlage zwischen den beiden Wellen bedarfsabhängig einstellbar ist. Durch die Variation der relativen Drehlage zwischen der durch die Antriebswelle gebildeten Eingangsseite des Antriebsstrangs und der durch das Ventilglied gebildeten Ausgangsseite des Antriebsstrangs ist es möglich, die Schließphasen und die Öffnungsphasen des Ventilglieds innerhalb der rotierenden Bewegung nach vorn oder nach hinten bzw. nach früh oder nach spät zu verstellen. Des Weiteren ist es bei einer dynamischen Betätigung des Stellantriebs möglich, die Länge bzw. den Umfangsanteil der Öffnungsphasen bzw. der Schließphasen innerhalb der Rotationsbewegung zu verändern.

Die vorgeschlagene Bauweise ermöglicht somit eine Veränderung der an sich starren Kopplung zwischen Antriebswelle und Ventilglied, wodurch es auch bei einem permanent angetriebenen Antriebsstrang möglich ist, die Betätigung des Ventilglieds zu variieren. Somit erhält die Ventileinrichtung eine erhöhte Funktionalität ebenso wie die damit ausgestattete Brennkraftmaschine.

Entsprechend einer besonderen Ausführungsform kann der Phasensteller als Additionsgetriebe ausgestaltet sein. Ein derartiges Additionsgetriebe charakterisiert sich dadurch, dass es einer eingansseitigen ersten Drehbewegung eine eingangsseitige zweite Drehbewegung überlagern kann und ausgangsseitig dann die überlagerte Drehebewegung, quasi als Summe bereitstellt. Ein typisches Beispiel für ein solches Additionsgetriebe ist ein Planetengetriebe. Dementsprechend kann bei einer zweckmäßigen Weiterbildung der Phasensteller als Planetengetriebe ausgestaltet sein. Dieses ist dann zweckmäßig so verbaut, dass ein Sonnenrad des Planetengetriebes mit der Antriebswelle antriebsgekoppelt ist, während ein Planetenräder des Planetengetriebes tragender Planetenradträger mit dem Ventilglied antriebsgekoppelt ist, oder umgekehrt. Über ein nicht mitrotierendes Hohlrad des Planetengetriebes sind das Sonnenrad und der Planetenradträger miteinander antriebsgekoppelt. Mit Hilfe eines geeigneten Stellantriebs kann das Hohlrad hinsichtlich seiner Drehlage verändert werden. Hierdurch kann eine relative Drehlage zwischen dem Antriebsrad und dem Ventilglied variiert werden.

Erfindungsgemäß weist der Antriebsstrang eine betätigbare Kupplung auf, die eingangsseitig mit einem Antriebsabschnitt der Antriebswelle drehfest verbunden ist, wobei die Kupplung ausgangsseitig mit einem Abtriebsabschnitt der Antriebswelle drehfest verbunden ist. Die Kupplung bewirkt in einem eingekuppelten Zustand eine drehfeste Verbindung zwischen den beiden Abschnitten der Antriebswelle und lässt in einem ausgekuppelten Zustand relative Drehbewegungen zwischen den Abschnitten der Antriebswelle zu. Mit anderen Worten, mit Hilfe einer derartigen betätigbaren Kupplung kann das Ventilglied antriebsmäßig vom Antriebsstrang entkoppelt bzw. zugeschaltet werden. Hierdurch kann die Funktionalität der Ventileinrichtung bzw. der Brennkraftmaschine weiter erhöht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen jeweils schematisch
- Fig. 1, 2: jeweils schematisch jeweils eine stark vereinfachte, prinzipielle, perspektivische Ansicht einer nicht erfindungsgemäßen Ventileinrichtung,
- Fig. 3- 5: jeweils eine stark vereinfachte, prinzipielle, perspektivische Ansicht einer Ventileinrichtung bei unterschiedlichen Ausführungsformen,
- Fig. 6: eine stark vereinfachte, schaltplanartige Prinzipdarstellung einer Brennkraftmaschine mit wenigstens einer solchen Ventileinrichtung,
- Fig. 7: eine stark vereinfachte, prinzipielle Schnittdarstellung eines Planetengetriebes.

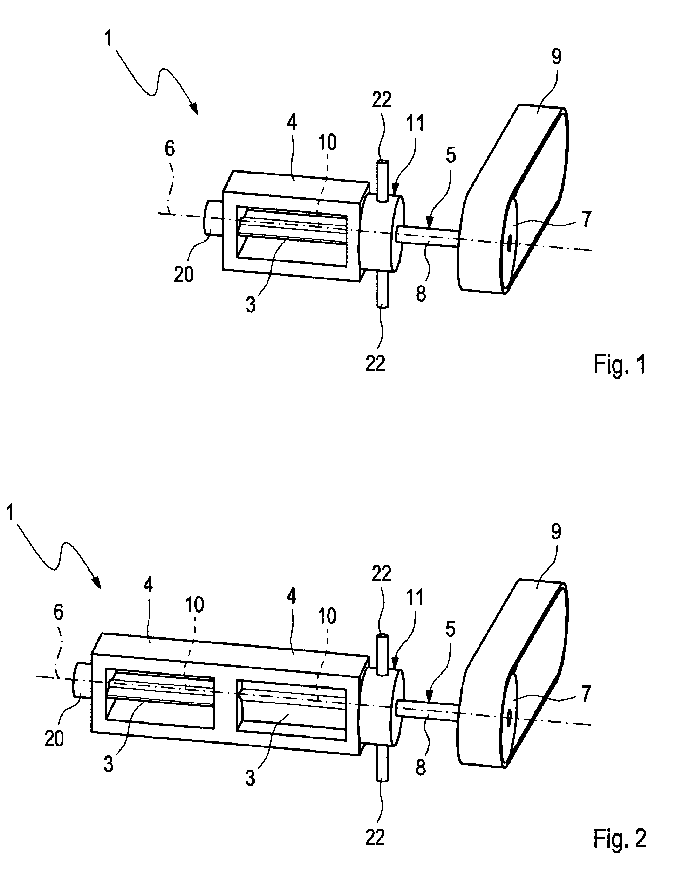

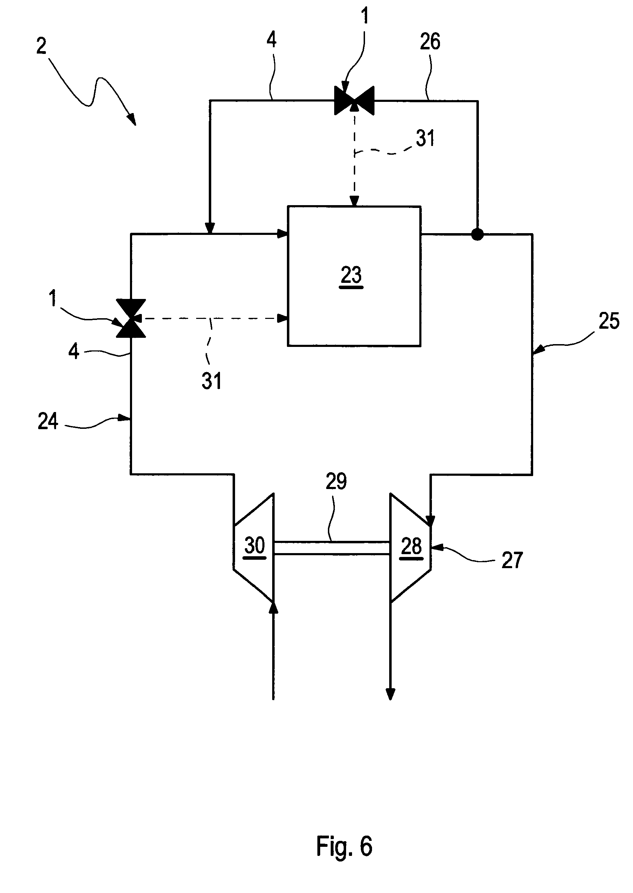

Entsprechend den Fig. 1 - 5 umfasst eine Ventileinrichtung 1, mit deren Hilfe eine Gasströmung bei einer in Fig. 6 dargestellten Brennkraftmaschine 2 beeinflusst bzw. gesteuert werden kann, zumindest ein Ventilglied 3. Mit Hilfe des Ventilglieds 3 kann ein durchströmbarer Querschnitt eines Kanals 4 verändert werden. In den Fig. 1 - 5 ist ein Kanalabschnitt dargestellt, der ebenfalls mit 4 bezeichnet ist und der einen Bestandteil der Ventileinrichtung 1 bildet und der in einen entsprechenden Kanal der Brennkraftmaschine 2 eingebaut werden kann. Die Brennkraftmaschine 2 ist bevorzugt in einem Kraftfahrzeug angeordnet.

Die Ventileinrichtung 1 umfasst einen Antriebsstrang 5, mit dessen Hilfe das wenigstens eine Ventilglied 3 drehend angetrieben werden kann. Dabei rotiert das Ventilglied 3 um eine Rotationsachse 6. Dieser Antriebsstrang 5 weist z.B. ein Antriebsrad 7 auf, das drehfest mit einer Antriebswelle 8 verbunden ist. Im montierten Zustand ist dieses Antriebsrad 7 mit einer nur in Fig. 6 angedeuteten Antriebseinrichtung 31 vorzugsweise permanent gekoppelt, derart, dass die Antriebseinrichtung 31 das Antriebsrad 7 drehend antreibt. Das Antriebsrad 7 rotiert dann ebenfalls um die Rotationsachse 6. Bei dieser Antriebseinrichtung 31 kann es sich grundsätzlich um einen beliebigen Antrieb handeln. Beispielsweise kann ein Elektromotor vorgesehen sein. Die Antriebskopplung, die zweckmäßig ebenfalls mit 31 bezeichnet wird, ist im Beispiel der Fig. 1 bis 5 zwischen der jeweiligen Antriebseinrichtung und dem Antriebsrad 7 durch einen Treibriemen 9 angedeutet. Grundsätzlich sind jedoch auch andere Antriebskopplungen 31 denkbar, wie zum Beispiel Keilriemen, Ketten, Zahnräder und dergleichen. Bevorzugt handelt es sich bei der Antriebseinrichtung 31 jedoch nicht um einen zusätzlichen Antrieb, sondern um eine Einrichtung, die bei der Brennkraftmaschine 2 ohnehin vorhanden ist. Beispielsweise handelt es sich um eine von der Brennkraftmaschine 2 während deren Betriebs ohnehin angetriebene Welle, wie zum Beispiel eine Kurbelwelle oder eine Nockenwelle. Hierdurch kann insbesondere ein permanenter Antrieb des Antriebsrads 7 realisiert werden, sobald die Brennkraftmaschine 2 in Betrieb ist. Des Weiteren führt eine derartige Antriebskopplung 31 zwischen Antriebsrad 7 und Brennkraftmaschine 2 dazu, dass das Antriebsrad 7 stets proportional zu einer Drehzahl der Brennkraftmaschine 2 angetrieben ist. Der Antriebsstrang 5 weist außerdem zumindest eine Ventilgliedwelle 10 auf, die mit dem Ventilglied 3 drehfest verbunden ist.

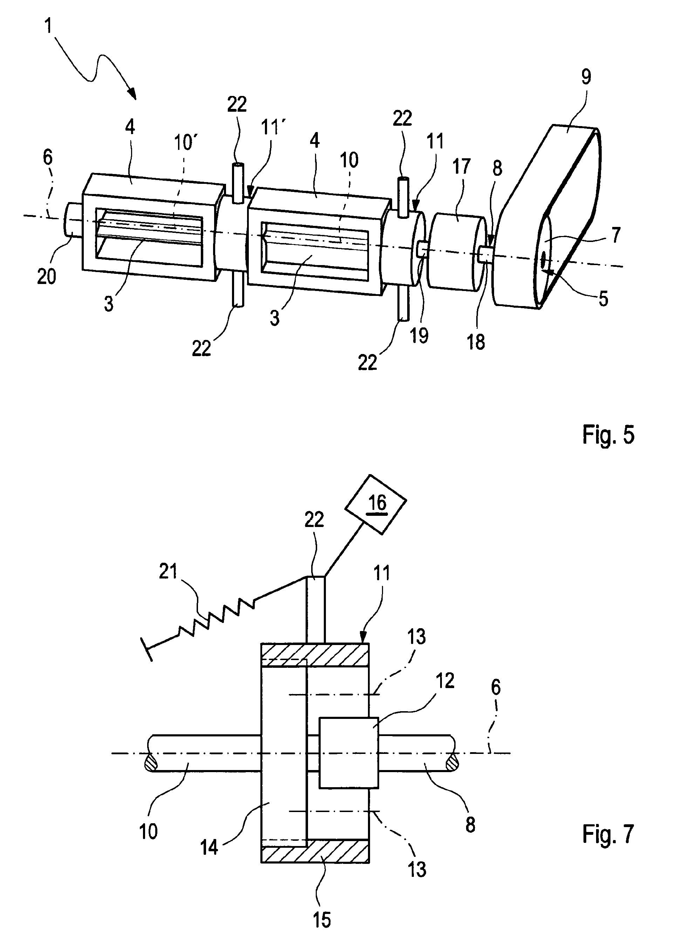

Ferner weist der Antriebsstrang 5 zumindest einen Phasensteller 11 auf, der im gezeigten bevorzugten Beispiel als Planetengetriebe 11 ausgestaltet ist. Grundsätzlich sind auch andere mechanisch arbeitende Additionsgetriebe vorteilhaft. Grundsätzlich kann aber auch ein hydraulisch oder pneumatisch arbeitender Phasensteller verwendet werden. Das bevorzugte Planetengetriebe 11 umfasst gemäß Fig. 7 in üblicher Bauart ein Sonnenrad 12, mehrere Planetenräder 13, einen Planetenradträger 14 und ein Hohlrad 15. Die Planetenräder 13 sind am Planetenradträger 14 drehbar gelagert und greifen in das zentral angeordnete Sonnenrad 12 ein. Außerdem greifen die Planetenräder 13 in das Hohlrad 15 ein. Gemäß den Fig. 1 - 5 dient das Planetengetriebe 11 bzw. ein beliebiges anderes Additionsgetriebe 11 oder ein beliebiger anderer Phasensteller 11 zum Einstellen einer relativen Drehlage zwischen der Antriebswelle 8 und der Ventilgliedwelle 10. Hierzu stellt der jeweilige Phasensteller 11, hier das Planetengetriebe 11 eine Antriebskopplung der Antriebswelle 8 mit der Ventilgliedwelle 10 her. Hierzu ist das Sonnenrad 12 des Planetengetriebes 11 mit der einen Welle, zum Beispiel mit der Antriebswelle 8, drehfest verbunden, während der Planetenradträger 14 mit der anderen Welle, also beispielsweise mit der Ventilgliedwelle 10 drehfest verbunden ist. Es ist klar, dass grundsätzlich auch eine umgekehrte Bauweise realisierbar ist, bei welcher das Sonnenrad 12 mit der Ventilgliedwelle 10 drehfest verbunden ist, während der Planetenradträger 14 mit der Antriebswelle 8 drehfest verbunden ist. Bei stehendem Hohlrad 15, also bei relativ zur Umgebung des Antriebsstrangs 5 fixiertem Hohlrad 15 sind die Ventilgliedwelle 10 und die Antriebswelle 8 antriebsmäßig zwangsgekoppelt. Durch Verändern der absoluten Drehlage des Hohlrads 15 kann jedoch die relative Drehlage zwischen den über das Planetengetriebe 11 miteinander gekoppelten Wellen 8, 10 variiert bzw. eingestellt werden. In Fig. 7 ist stark vereinfacht ein Stellantrieb 16 dargestellt, mit dessen Hilfe das Hohlrad 15 drehend betätigbar ist. Mit diesem Stellantrieb 16 kann das Hohlrad 15, insbesondere winkelmäßig begrenzte, Rotationen um die Rotationsachse 6 durchführen.

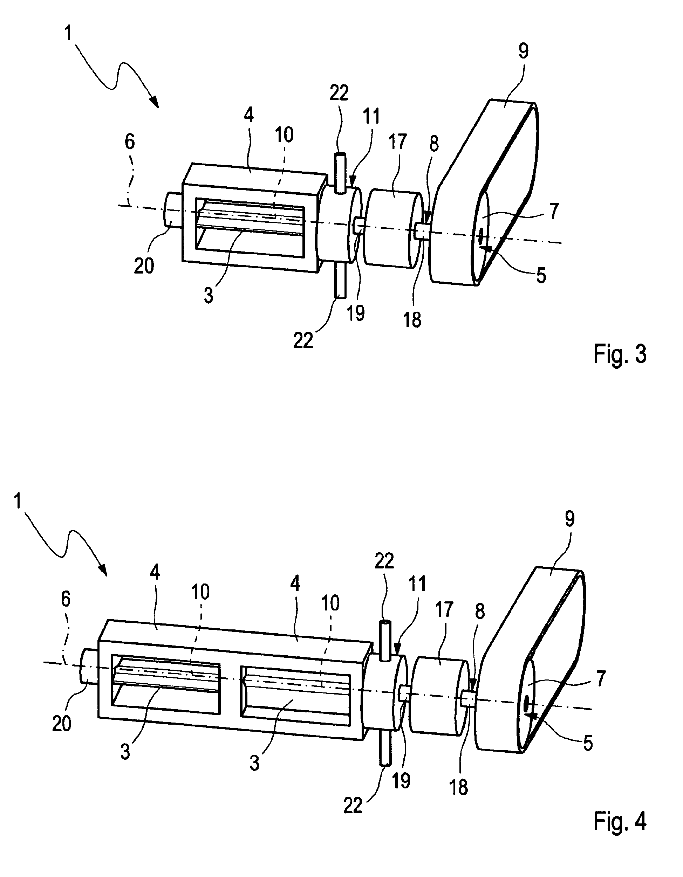

Die Fig. 2, 4 und 5 zeigen Ventileinrichtungen bei welchen zwei Ventilglieder 3 vorgesehen sind. Diese sind bei den in den Fig. 2 und 4 gezeigten Ventileinrichtungen mit derselben Ventilgliedwelle 10 drehfest verbunden. Im Beispiel sind die beiden Ventilglieder 3 relativ zueinander verdreht, also mit unterschiedlichen Drehlagen an der gemeinsamen Ventilgliedwelle 10 angeordnet. Die beiden Ventilglieder 3 sind dabei in zwei separaten Kanälen 4 bzw. Kanalabschnitten 4 angeordnet. Die beiden Kanalabschnitte 4 bilden in den Ausführungsformen der Fig. 2, 4 und 5 eine integral herstellbare bauliche Einheit.

Bei den Ausführungsformen der Fig. 3 - 5 ist der Antriebsstrang 5 mit einer betätigbaren Kupplung 17 ausgestattet. Diese Kupplung 17, die beispielsweise hydraulisch oder elektrisch oder pneumatisch betätigt werden kann, ist eingangsseitig mit einem Antriebsabschnitt 18 der Antriebswelle 8 drehfest verbunden. Die Kupplung 17 ist ausgangsseitig mit einem Abtriebsabschnitt 19 der Antriebswelle 8 drehfest verbunden. Ferner ist die Kupplung 17 zwischen einem eingekuppelten Zustand und einem ausgekuppelten Zustand schaltbar. Im eingekuppelten Zustand sind die beiden Wellenabschnitte 18, 19 drehfest miteinander verbunden. Im ausgekuppelten Zustand sind die beiden Wellenabschnitte 18, 19 relativ zueinander drehbar. Im ausgekuppelten Zustand lässt die Kupplung 17 somit relative Drehbewegungen zwischen den Abschnitten 18, 19 der Antriebswelle 8 zu. Da die Kupplung 17 in die Antriebswelle 8 eingebunden ist, befindet sie sich innerhalb des Antriebsstrangs 5 zwischen dem Antriebsrad 7 und dem Phasensteller 11 bzw. dem Planetengetriebe 11. Grundsätzlich ist auch denkbar, die Kupplung 17 zwischen dem Phasensteller 11 bzw. dem Planetengetriebe 11 und dem Ventilglied 3 in die Ventilgliedwelle 10 einzubinden.

Mit Hilfe der Kupplung 17 kann somit die Rotationsbewegung der Ventilglieder 3 gestoppt werden, auch wenn das Antriebsrad 7 weiter permanent angetrieben wird. Beispielsweise sind Betriebszustände für die Brennkraftmaschine 2 denkbar, bei welcher die Ventileinrichtung 1 bzw. ein periodisches Öffnen und Sperren des jeweiligen Kanals 4 nicht erwünscht ist. Des Weiteren können Fehler auftreten. Die Entkoppelbarkeit des jeweiligen Ventilglieds 3 von der jeweiligen Antriebseinrichtung bzw. vom Antriebsrad 7 ermöglicht dann eine Notlauffunktion für die Brennkraftmaschine 2.

Entsprechend den Fig. 1 - 5 kann die Ventileinrichtung 1 außerdem mit zumindest einem Sensor 20 ausgestattet sein, mit dessen Hilfe die absolute Drehlage des jeweiligen Ventilglieds 3 bzw. der beiden Ventilglieder 3 ermittelt werden kann.

Bei der in Fig. 5 gezeigten Ausführungsform sind ebenso wie bei den Ventileinrichtungen der Fig. 2 und 4 zwei Ventilglieder 3 vorgesehen, um die durchströmbaren Querschnitte bei zwei separaten Kanälen bzw. Kanalabschnitten 4 zu variieren bzw. zu steuern. Während bei den Ventileinrichtungen der Fig. 2 und 4 die beiden Ventilglieder 3 drehfest mit einer gemeinsamen Ventilgliedwelle 10 verbunden sind, weist der Antriebsstrang 5 bei der in Fig. 5 gezeigten Ausführungsform zwei separate Ventilgliedwellen 10 und 10' auf, die jeweils mit einem der Ventilglieder 3 drehfest verbunden sind. Des Weiteren ist die Ausführungsform der Fig. 5 mit einem zusätzlichen oder weiteren Phasensteller 11' ausgestattet, mit dessen Hilfe die beiden Ventilgliedwellen 10, 10' miteinander antriebsgekoppelt sind. Der weiter Phasensteller 11' kann wieder als Planetengetriebe 11' oder als ein beliebiges anderes geeignetes Additionsgetriebe 11' ausgestaltet sein. Dieses weitere oder zweite Planetengetriebe 11' weist grundsätzlich den identischen Aufbau wie das zuvor erläuterte erste Planetengetriebe 11 auf. Dabei ist das Sonnenrad 12 des zweiten Planetengetriebes 11' mit der einen Ventilgliedwelle 3 drehfest verbunden, während der Planetenradträger 14 mit der anderen Ventilgliedwelle 3 drehfest verbunden ist. Auch hier ist das Hohlrad 15 mit Hilfe eines entsprechenden Stellantriebs drehend betätigbar, um die relative Drehlage zwischen den beiden Ventilgliedern 3 fixieren oder einstellen bzw. variieren zu können. Durch diese Bauweise ist es möglich, die an sich synchron rotierenden Ventilglieder 3 hinsichtlich ihrer relativen Drehlage zu verändern. Zweckmäßig ist das zweite Planetengetriebe 11' so ausgestaltet, dass es bei stehendem Hohlrad 15 die Drehbewegung der einen Ventilgliedwelle 10 übersetzungsfrei, also 1:1 auf die andere Ventilgliedwelle 10' überträgt. Unabhängig davon kann das zuvor beschriebene oder erste Planetengetriebe 11 die beiden damit gekoppelten Wellen, nämlich die Antriebswelle 8 und die Ventilgliedwelle 10 übersetzungsfrei, also ohne Drehzahländerung, miteinander koppeln. Alternativ kann bei diesem Planetengetriebe 11 auch eine Übersetzung oder eine Untersetzung denkbar sein.

Entsprechend Fig. 7 kann dem jeweiligen Phasensteller 11 bzw. Additionsgetriebe 11 bzw. Planetengetriebe 11 eine Rückstellfeder 21 zugeordnet sein, die in Fig. 7 lediglich kursorisch dargestellt ist und welche die beiden Wellen 8, 10, 10' in eine relative Ausgangslage antreibt. Im Beispiel dient diese Rückstellfeder 21 also zum Antreiben des Hohlrads 15 in eine Ausgangsstellung. Hierzu greift die Rückstellfeder 21 am Hohlrad 15 an. Alternativ kann die Rückstellfeder 21 auch am Stellantrieb 16 angreifen. Für die Einleitung eines Drehmoments in das Hohlrad 15 zum Verdrehen des Hohlrads 15 um die Rotationsachse 6, kann am Hohlrad 15 ein Betätigungsstift 22 angebracht sein, der in den gezeigten Beispielen radial vom Hohlrad 15 absteht. In den Ausführungsformen der Figuren 1 - 5 ist das jeweilige Planetengetriebe 11 bzw. 11' an seinem Hohlrad 15 jeweils mit zwei derartigen Betätigungsstiften 22 ausgestattet. Der eine Betätigungsstift 22 dient dann beispielsweise zum Koppeln des jeweiligen Planetengetriebes 11, 11' mit dem Stellantrieb 16, während der andere Betätigungsstift 22 dann zweckmäßig zum Koppeln des jeweiligen Planetengetriebes 11, 11' mit der Rückstellfeder 21 dient.

Entsprechend Fig. 6 umfasst die Brennkraftmaschine 2 einen Motorblock 23, einen Frischluftpfad 24 zum Zuführen von Frischluft zum Motorblock 23 und einen Abgaspfad 25 zum Abführen von Abgasen vom Motorblock 23. Des Weiteren ist hier eine Rückführleitung 26 vorgesehen, die es ermöglicht, Abgas vom Abgaspfad 25 zum Frischluftpfad 24 zurückzuführen. Es ist klar, dass diese Rückführleitung 26 zumindest teilweise auch innerhalb des Motorblocks 23 verlaufen kann.

Im Beispiel ist die Brennkraftmaschine 2 außerdem mit einer Ladeeinrichtung 27 ausgestattet. Hierbei kann es sich exemplarisch um einen Abgasturbolader handeln, dessen Turbine 28 im Abgaspfad 25 angeordnet ist und über eine Welle 29 mit einem Verdichter 30 drehfest verbunden ist, der im Frischluftpfad 24 angeordnet ist. Besonders zweckmäßig ist es, die Rückführleitung 26 abgasseitig stromauf der Turbine 28 an den Abgaspfad 25 anzuschließen, um ein möglichst hohes Druckniveau im rückzuführenden Abgas bereitstellen zu können. Ferner ist es zweckmäßig, die Rückführleitung 26 stromab des Verdichters 30 an den Frischluftpfad 24 anzuschließen, um eine Verschmutzung, beispielsweise durch Ruß, des Verdichters 30 zu vermeiden.

Die Brennkraftmaschine 2 kann nun zumindest eine Ventileinrichtung 1 der zuvor beschriebenen Bauart aufweisen. Beispielsweise ist eine solche Ventileinrichtung 1 in den Frischluftpfad 24 eingebaut. Der Frischluftpfad 24 weist in dem Bereich, in dem die Ventileinrichtung 1 integriert ist, einen hierfür geeigneten Kanal 4 auf. Alternativ dazu kann eine solche Ventileinrichtung 1 in die Rückführleitung 26 eingebaut sein, die am Einbauort der Ventileinrichtung 1 als Kanal 4 ausgestaltet ist. Des Weiteren ist eine Ausführungsform denkbar, bei der sowohl im Frischluftpfad 24 als auch in der Rückführleitung 26 jeweils eine solche Ventileinrichtung 1 angeordnet sein kann. In jedem Fall ist die jeweilige Ventileinrichtung 1 zusätzlich zu Gaswechselventilen der Brennkraftmaschine 2 bzw. des Motorblocks 23 vorhanden. Die jeweilige Ventileinrichtung 1 ist dabei im Frischluftpfad 24 bzw. in der Rückführleitung 26 stromauf der Gaswechselventile angeordnet.

Die zuvor genannten Antriebseinrichtung 31 zum Antreiben des Antriebsrads 7 kann - wie erläutert - durch eine im Betrieb der Brennkraftmaschine 2 angetriebene Komponente, beispielsweise des Motorblocks 23, gebildet sein. Beispielsweise handelt es sich um eine Kurbelwelle oder um eine Nockenwelle. Ebenso kann eine Kopplung mit einem von der Kurbelwelle angetriebenen Zahnriemen oder mit einem ebenfalls von der Kurbelwelle angetriebenen Keilriemen oder dergleichen realisiert werden. Eine entsprechende Antriebskopplung 31 zwischen dem Antriebsstrang 5 der jeweiligen Ventileinrichtung 1 mit dem Motorblock 23 ist in Fig. 6 durch einen Doppelpfeil mit unterbrochener Linie angedeutet und mit 31 bezeichnet. Insbesondere ist die jeweils gewählte Antriebseinrichtung 31 für einen permanenten Antrieb des Antriebsrads 7 während des Betriebs der Brennkraftmaschine 2 ausgestaltet. Die Antriebseinrichtung, die ebenfalls mit 31 bezeichnet werden kann, bildet bevorzugt einen Bestandteil der Brennkraftmaschine 2 bzw. des Motorblocks 23. Des Weiteren ist die jeweilige Antriebseinrichtung 31 zweckmäßig zum Antreiben des Antriebsrads 7 mit einer zur Drehzahl der Kurbelwelle der Brennkraftmaschine 2 proportionalen Antriebsdrehzahl ausgestaltet. Durch die Synchronisierung des Antriebsstrangs 5 der Ventileinrichtung 1 mit der Drehzahl der Brennkraftmaschine 2 erfolgt eine eindeutige Zuordnung zu den Ladungswechselvorgängen bei den einzelnen Zylindern der Brennkraftmaschine 2. Bei Kenntnis des Kurbelwellenwinkels können außerdem die Schaltvorgänge der Ventileinrichtung 1 gezielt auf die Ladungswechselvorgänge abgestimmt werden.

Die Ventileinrichtung 1 dient bevorzugt zum Einstellen einer Abgasrückführrate der Abgasrückführeinrichtung. Beispielsweise lassen sich mit Hilfe der im Frischluftpfad 24 angeordneten Ventileinrichtung 1 in der Frischluft Druckschwingungen erzeugen, die im Bereich ihrer negativen Schwingungsamplituden vergleichsweise niedrige Drücke erreichen, auch wenn die Ventileinrichtung 1 - wie im gezeigten Beispiel der Fig. 6 - bezüglich der Ladeeinrichtung 27 auf der Druckseite des Frischluftpfads 24 angeordnet ist. Insbesondere durch die Ausnutzung strömungsdynamischer Effekte ist es relativ einfach möglich, innerhalb der Druckschwingungen sich periodisch wiederholende Bereiche mit Drücken zu erzeugen bzw. zu verstärken, die unterhalb des Drucks liegen, den das rückzuführende Abgas in der Rückführleitung 26 aufweist. Durch Steuern bzw. Ausnutzen der Druckschwingungen im Frischluftpfad 24 kann somit die Abgasrückführrate gesteuert bzw. eingestellt werden.

Im Unterschied dazu kann die in der Rückführleitung 26 angeordnete Ventileinrichtung 1 zum Erzeugen bzw. Verstärken von Druckschwingungen genutzt werden, derart, dass im Bereich positiver Schwingungsamplituden Drücke auftreten, die oberhalb des Drucks der Frischluft im Frischluftpfad 24 liegen. Dies gilt insbesondere auch dann, wenn die Rückführleitung 26 - wie im gezeigten Beispiel der Fig. 6 - an die Druckseite des Frischluftpfads 24 angeschlossen ist. Somit kann durch Steuern der Druckschwingungen in der Rückführleitung 26 die Abgasrückführrate eingestellt werden.

Die vorstehend beschriebenen zwei Anwendungsformen der Ventileinrichtung 1 bei einer Brennkraftmaschine 2 können alternativ sowie kumulativ realisiert werden. Auch sind grundsätzlich andere Einbausituationen für die Ventileinrichtung 1 denkbar. Beispielsweise kann eine solche Ventileinrichtung 1 auch im Abgaspfad 25 stromab der Anschlussstelle zwischen Rückführleitung 26 und Abgaspfad 25 angeordnet sein, um durch periodisches Aufstauen den Druck im Abgas auf ein erhöhtes Druckniveau zu bringen.

Durch die permanente bzw. zwangsläufige Drehzahlkopplung zwischen der Kurbelwelle und dem wenigstens einen Ventilglied 3 arbeiten die Ladungswechselvorgänge und die Öffnungsbewegungen bzw. Schließbewegungen des jeweiligen Ventilglieds 3 synchron. Um beispielsweise in einem bestimmten Betriebspunkt der Brennkraftmaschine die Abgasrückführmenge variieren zu können, kann mit Hilfe des genannten Stellantriebs 16 eine zeitliche Verschiebung zwischen den Ladungswechselvorgängen und den Schließvorgängen bzw. Öffnungsvorgängen des jeweiligen Ventilglieds 3 realisiert werden. Bei diesen Einstellungen wird der Stellantrieb 16 "statisch" betätigt, das heißt, es wird eine bestimmte relative Drehlage zwischen den mit dem jeweiligen Phasensteller bzw. Planetengetriebe 11, 11' gekoppelten Wellen 8, 10 eingestellt und zumindest vorübergehend aufrechterhalten. Ebenso ist es grundsätzlich möglich, den Stellantrieb 16 dynamisch zu betätigen, wodurch es insbesondere auch möglich ist, die Öffnungsphasen bzw. die Schließphasen des jeweiligen Ventilglieds 3 zu variieren. Dies kann ebenfalls zum Verändern der Abgasrückführrate genutzt werden.

Die jeweilige Ventilgliedwelle 10 kann bezüglich des zugehörigen Ventilglieds 3 ein separates Bauteil sein, das auf geeignete Weise drehfest mit dem zugehörigen Ventilglied 3 drehfest verbunden ist. Ebenso ist es möglich, die jeweilige Ventilgliedwelle 10 baulich in das zugehörige Ventilglied 3 zu integrieren. Bei den hier gezeigten Ventileinrichtungen ist das Ventilglied 3 jeweils als Klappe, insbesondere als Schmetterlingsklappe, ausgestaltet. Sie besitzt hier einen rechteckigen Querschnitt. Ebenso sind andere Querschnitte für das klappenförmige Ventilglied 3 denkbar. Alternativ kann das Ventilglied auch als Drehschieber oder dergleichen ausgestaltet sein.

## Patentansprüche

1. Brennkraftmaschine (2), insbesondere eines Kraftfahrzeugs, mit mindestens einem Kanal (4) zum Führen einer Gasströmung, in dem eine Ventileinrichtung (1) zum Beeinflussen und/oder Steuern der Gasströmung angeordnet ist, die mindestens ein Ventilglied (3) zum Verändern eines durchströmbaren Querschnitts des die Gasströmung führenden Kanals (4) sowie einen Antriebsstrang (5) zum drehenden Antreiben des wenigstens einen Ventilglieds (3) aufweist,
- wobei der Antriebsstrang (5) eine Antriebswelle (8) aufweist und eingangsseitig mit einer Antriebseinrichtung (31) zum drehenden Antreiben der Antriebswelle (8) gekoppelt ist,
- wobei der Antriebsstrang (5) zumindest eine Ventilgliedwelle (10) aufweist, die drehfest mit dem Ventilglied (3) verbunden ist,
- wobei der Antriebsstrang (5) zumindest einen Phasensteller (11) zur Antriebskopplung der Antriebswelle (8) mit der Ventilgliedwelle (10) aufweist, mit dem eine relative Drehlage zwischen Antriebswelle (8) und Ventilgliedwelle (10) variierbar ist,
- wobei die Ventileinrichtung (1) in einem Frischluftpfad (24) einer Frischluftanlage der Brennkraftmaschine (2) angeordnet und zum Einstellen einer Abgasrückführrate einer Abgasrückführeinrichtung ausgestaltet ist, die eine an den Frischluftpfad (24) angeschlossene Rückführleitung (26) aufweist, dadurch gekenneichnet, dass
- der Antriebsstrang (5) eine betätigbare Kupplung (17) aufweist, die eingangsseitig mit einem Antriebsabschnitt (18) der Antriebswelle (8) drehfest verbunden ist, die ausgangsseitig mit einem Abtriebsabschnitt (19) der Antriebswelle (8) drehfest verbunden ist, die in einem eingekuppelten Zustand die beiden Abschnitte (18, 19) der Antriebswelle (8) drehfest miteinander verbindet und die in einem ausgekuppelten Zustand relative Drehbewegungen zwischen den Abschnitten (18, 19) der Antriebswelle (8) zulässt.

2. Brennkraftmaschine nach Anspruch 1,
**dadurch gekennzeichnet,**
**dass** die Frischluftanlage zweiflutig ausgestaltet ist, wobei die Ventileinrichtung (1) zwei Ventilglieder (3) aufweist, die jeweils einer Flut zum Verändern des durchströmbaren Querschnitts zugeordnet sind.

3. Brennkraftmaschine nach Anspruch 1 oder 2,
**dadurch gekennzeichnet,**
**dass** die Antriebseinrichtung (31) zum permanenten Antreiben des Antriebsabschnittes (18) der Antriebswelle (8) während des Betriebs der Brennkraftmaschine (2) ausgestaltet ist.

4. Brennkraftmaschine nach einem der Ansprüche 1 bis 3,
**dadurch gekennzeichnet,**
**dass** die Antriebseinrichtung (31) zum Antreiben der Antriebswelle (8) mit einer zur Drehzahl einer Kurbelwelle der Brennkraftmaschine (2) proportionalen Antriebsdrehzahl ausgestaltet ist.

5. Brennkraftmaschine nach einem der Ansprüche 1 bis 4,
**dadurch gekennzeichnet,**
**dass** die Ventileinrichtung (1) stromauf von Gaswechselventilen der Brennkraftmaschine (2) im jeweiligen Kanal angeordnet ist.

6. Brennkraftmaschine nach einem der Ansprüche 1 bis 5,
**dadurch gekennzeichnet,**
**dass** der Antriebsstrang (5) eingangsseitig ein Antriebsrad (7) aufweist, das drehfest mit dem Antriebabschnitt (18) der Antriebswelle (8) verbunden ist und das im Einbauzustand der Ventileinrichtung (1) mit der Antriebseinrichtung (31) zum drehenden Antreiben des Antriebsrads (7) gekoppelt ist.

7. Brennkraftmaschine nach einem der Ansprüche 1 bis 6,
**dadurch gekennzeichnet,**
**dass** der wenigstens eine Phasensteller als Additionsgetriebe (11) ausgestaltet ist.

8. Brennkraftmaschine nach einem der Ansprüche 1 bis 7,
**dadurch gekennzeichnet,**
- **dass** der wenigstens eine Phasensteller als Planetengetriebe (11) ausgestaltet ist,
- **dass** ein Sonnenrad (12) des Planetengetriebes (11) mit der einen Welle (8 oder 10) drehfest verbunden ist,
- **dass** Planetenräder (13) des Planetengetriebes (11) an einem drehfest mit der anderen Welle (10 oder 8) verbundenen Planetenradträger (14) gelagert sind,
- **dass** ein Hohlrad (15) des Planetengetriebes (11) zum Einstellen einer relativen Drehlage zwischen den beiden Wellen (8,10) mittels eines Stellantriebs (16) fixierbar und drehend betätigbar ist.

9. Brennkraftmaschine nach einem der Ansprüche 1 bis 8,
**dadurch gekennzeichnet,**
**dass** zwei Ventilglieder (3) vorgesehen sind, die mit derselben Ventilgliedwelle (10) drehfest verbunden sind, wobei insbesondere die beiden Ventilglieder (3) relativ zueinander verdreht an der gemeinsamen Ventilgliedwelle (10) angeordnet sein können.

10. Brennkraftmaschine nach einem der Ansprüche 1 bis 8,
**dadurch gekennzeichnet,**
- **dass** zwei Ventilglieder (3) vorgesehen sind,
- **dass** der Antriebsstrang (5) zwei separate Ventilgliedwellen (10, 10') aufweist, die jeweils mit einem der Ventilglieder (3) drehfest verbunden sind,
- **dass** der Antriebsstrang (5) einen weiteren Phasensteller (11') zur Antriebskopplung der beiden Ventilgliedwellen (10, 10') aufweist.

11. Brennkraftmaschine nach Anspruch 10,
**dadurch gekennzeichnet,**
- **dass** der weitere Phasensteller als Additionsgetriebe (11) ausgestaltet ist, und/oder
- **dass** der weitere Phasensteller als Planetengetriebe (11') ausgestaltet ist, dessen Sonnenrad (12) mit der einen Ventilgliedwelle (10 oder 10') drehfest verbunden ist, dessen Planetenräder (13) an einem drehfest mit der anderen Ventilgliedwelle (10' oder 10) verbundenen Planetenradträger (14) gelagert sind und dessen Hohlrad (15) zum Einstellen einer relativen Drehlage zwischen den beiden Ventilgliedern (3) mittels eines Stellantriebs (16) fixierbar und drehend betätigbar ist.

12. Brennkraftmaschine nach einem der Ansprüche 1 bis 11,
**dadurch gekennzeichnet,**
**dass** dem jeweiligen Phasensteller (11, 11') eine Rückstellfeder (21) zugeordnet ist, die den jeweiligen Phasensteller (11, 11') zum Einstellen einer Ausgangsdrehlage zwischen den Wellen (8, 10, 10') antreibt.

13. Brennkraftmaschine nach einem der Ansprüche 1 bis 12,
**dadurch gekennzeichnet,**
**dass** zumindest ein Sensor (20) zur Ermittlung einer Drehlage wenigstens eines Ventilglieds (3) vorgesehen ist.

14. Brennkraftmaschine nach einem der Ansprüche 1 bis 13,
**dadurch gekennzeichnet,**
**dass** zumindest ein Kanalabschnitt (4) vorgesehen ist, in dem das jeweilige Ventilglied (3) drehend verstellbar angeordnet ist und der in den Kanal einbaubar ist.

## Claims

1. An internal combustion engine (2), in particular of a motor vehicle, with at least one channel (4) for conveying a gas flow, in which channel a valve unit (1) for influencing and/or controlling a gas flow is arranged, which valve unit has at least one valve member (3) for changing a cross-section of a gas flow-conveying channel (4) through which a fluid can flow and a drive train (5) for rotatingly driving the at least one valve member (3),
- wherein the drive train (5) has an input shaft (8) and is coupled on the input side to a drive device (31) for rotatingly driving the input shaft (8),
- wherein the drive train (5) has at least one valve member shaft (10) which is rotationally fixedly connected to the valve member (3),
- wherein the drive train (5) has at least one phase adjuster (11) for drivingly coupling the input shaft (8) to the valve member shaft (10), by means of which phase adjuster, a rotational position of the input shaft (8) relative to the valve member shaft (10) can be varied,
- wherein the valve unit (1) is arranged in a fresh air path (24) of the internal combustion engine (2) and is configured for adjusting an exhaust gas recirculation rate of an exhaust gas recirculation device which has a recirculation line (26) connected to the fresh air path (24),
**characterized in**
- **that** the drive train (5) has an actuatable coupling (17) which, on the input side, is rotationally fixedly connected to an input section (18) of the input shaft (8), which, on the output side, is rotationally fixedly connected to an output section (19) of the input shaft (8), which, in a coupled state, rotationally fixedly connects the two sections (18, 19) of the input shaft (8) to each other, and which, in a decoupled state, allows rotational movements of the sections (18, 19) of the input shaft (8) relative to each other.

2. The internal combustion engine according to claim 1,
**characterized in**
**that** the fresh air system is configured as double-flow system, wherein the valve unit (1) has two valve members (3) which each are allocated to one flow for changing the cross-section through which a fluid can flow.

3. The internal combustion engine according to claim 1 or claim 2,
**characterized in**
**that** the drive device (31) is configured for permanently driving the input section (8) of the input shaft (8) during the operation of the internal combustion engine (2).

4. The internal combustion engine according to any one of the claims 1 to 3,
**characterized in**
**that** the drive device (31) for driving the input shaft (8) is configured with a drive speed which is proportional to the speed of a crankshaft of the internal combustion engine (2).

5. The internal combustion engine according to any one of the claims 1 to 4,
**characterized in**
**that** the valve unit (1) is arranged upstream of gas exchange valves of the internal combustion engine (2) in the respective channel.

6. The internal combustion engine according to any one of the claims 1 to 5,
**characterized in**
**that** on the input side, the drive train (5) has a drive wheel (7) which is rotationally fixedly connected to the input section (18) of the input shaft (8) and which, in the mounted state of the valve unit (1), is coupled to the drive device (31) for rotatingly driving the drive wheel (7).

7. The internal combustion engine according to any one of the claims 1 to 6,
**characterized in**
**that** the at least one phase adjuster is configured as addition gearing (11).

8. The internal combustion engine according to any one of the claims 1 to 7,
**characterized in**
- **that** the at least one phase adjuster is configured as planetary gearing (11),
- **that** a sun gear (12) of the planetary gearing (11) is rotationally fixedly connected to the one shaft (8 or 10),
- **that** planetary gears (13) of the planetary gearing (11) are mounted on a planetary gear carrier (14) which is rotationally fixedly connected to the other shaft (10 or 8),
- **that** for adjusting a rotational position of the two shafts (8, 10) relative to each other, an annulus gear (15) of the planetary gearing (11) is fixable and rotatingly actuatable by means of an actuator (16).

9. The internal combustion engine according to any one of the claims 1 to 8,
**characterized in**
**that** two valve members (3) are provided which are rotationally fixedly connected to the same valve member shaft (10), wherein, in particular, the two valve members (3) can be arranged rotated relative to each other on the common valve member shaft (10).

10. The internal combustion according to any one of the claims 1 to 8,
**characterized in**
- **tha**t two valve members (3) are provided,
- that the drive train (5) has two separate valve member shafts (10, 10') which each are rotationally fixedly connected to one of the valve members (3),
- that the drive train (5) has a further phase adjuster (11') for drivingly coupling the two valve member shafts (10, 10').

11. The internal combustion engine according to claim 10, **characterized in**
- **that** the further phase adjuster is configured as addition gearing (11),
and/or
- **that** the further phase adjuster is configured as planetary gearing (11'), the sun gear (12) of which is rotationally fixedly connected to the one valve member shaft (10 or 10'), the planetary gears (13) of which are mounted on a planetary gear carrier (14) which rotationally fixedly connected to the other valve member shaft (10', 10), and the annulus gear (15) of which, for adjusting a rotational position of the two members (3) relative to each other, is fixable and rotatingly actuatable by means of an actuator (16).

12. The internal combustion engine according to any one of the claims 1 to 11,
**characterized in**
**that** a reset spring (21) is allocated to the respective phase adjuster (11, 11'), which spring drives the respective phase adjuster (11, 11') for adjusting an initial rotational position of the shafts (8, 10, 10') relative to each other.

13. The internal combustion engine according to any one of the claims 1 to 12,
**characterized in that** at least one sensor (20) for determining a rotational position of at least one valve member (3) is provided.

14. An internal combustion engine according to any one of the claims 1 to 13,
**characterized in**
**that** at least one channel section (4) is provided in which the respective valve member (3) is arranged in a rotationally adjustable manner and which section can be mounted in the channel.

## Revendications

1. Moteur à combustion interne (2), notamment d'un véhicule automobile, comportant au moins un canal (4) pour guider un écoulement de gaz, dans lequel un dispositif de soupape (1) pour influencer et/ou commander l'écoulement de gaz est disposé, qui présente au moins un organe de soupape (3) pour modifier une section transversale pouvant être traversée du canal (4) guidant l'écoulement de gaz ainsi qu'un groupe propulseur (5) pour entraîner rotativement au moins un organe de soupape (3),
- dans lequel le groupe propulseur (5) présente un arbre d'entraînement (8) et est couplé du côté d'entrée avec un dispositif d'entraînement (31 pour entraîner rotativement l'arbre d'entraînement (8),
- dans lequel le groupe propulseur (5) présente au moins un arbre d'organe de soupape (10), qui est relié à l'organe de soupape (3) de manière solidaire en rotation,
- dans lequel le groupe propulseur (5) présente au moins un gradateur de phase (11) pour le couplage en entraînement de l'arbre d'entraînement (8) avec l'arbre d'organe de soupape (10), avec lequel une position de rotation relative ente l'arbre d'entraînement (8) et l'arbre d'organe de soupape (10) peut être variée,
- dans lequel le dispositif de soupape (1) est disposé dans un trajet d'air frais (24) d'une installation d'air frais du moteur à combustion interne (2) et est conçu pour régler un taux de réintroduction de gaz d'échappement d'un dispositif de réintroduction de gaz d'échappement, qui présente une conduite de réintroduction (26) raccordée au trajet d'air frais (24), **caractérisé en ce que** le groupe propulseur (5) présente un embrayage (17) actionnable, qui est relié de manière solidaire en rotation du côté d'entrée avec une portion d'entraînement (18) de l'arbre d'entraînement (8), qui est relié de manière solidaire en rotation du côté de sortie avec une portion de sortie (19) de l'arbre d'entraînement (8), qui dans un état embrayé relie les deux portions (18,19) de l'arbre d'entraînement (8) l'une à l'autre de manière solidaire en rotation et qui dans un état débrayé autorise des mouvements de rotation relatifs entre les portions (18,19) de l'arbre d'entraînement (8).

2. Moteur à combustion interne selon la revendication 1,
**caractérisé en ce que**
l'installation d'air frais est conçue à deux flux, dans lequel le dispositif de soupape (1) présente deux organes de soupape (3), qui sont coordonnée respectivement à un flux pour varier la section transversale pouvant être traversée.

3. Moteur à combustion interne selon la revendication 1 ou 2,
**caractérisé en ce que**
le dispositif d'entraînement (31) est conçu pour l'entraînement permanent de la portion de sortie (18) de l'arbre d'entraînement (8) pendant le fonctionnement du moteur à combustion interne (2).

4. Moteur à combustion interne selon une des revendications 1 à 3,
**caractérisé en ce que**
le dispositif d'entraînement (31) est conçu pour entraîner l'arbre d'entraînement (8) avec un régime d'entraînement proportionnel au régime d'un vilebrequin du moteur à combustion interne (2).

5. Moteur à combustion interne selon une des revendications 1 à 4,
**caractérisé en ce que**
le dispositif de soupape (1) est disposé en amont des soupape de changement de gaz du moteur à combustion interne (2) dans le canal respectif.

6. Moteur à combustion interne selon une des revendications 1 à 5,
**caractérisé en ce que**
le groupe propulseur (5) présente du côté d'entrée un pignon d'entraînement (7), qui est relié de manière solidaire en rotation à l'arbre d'entraînement et qui en l'état monté du dispositif de soupape (1) est couplé avec le dispositif d'entraînement (31) à des fins d'entraînement rotatif du pignon d'entraînement (7).

7. Moteur à combustion interne selon une des revendications 1 à 6,
**caractérisé en ce que**
au moins un gradateur de phase est conçu comme un engrenage additionnel (11).

8. Moteur à combustion interne selon une des revendications 1 à 7,
**caractérisé en ce que**
- au moins un gradateur de phase est conçu comme un engrenage planétaire (11),
- un pignon solaire (12) de l'engrenage planétaire (11) est relié de manière solidaire en rotation à un des arbres (8 ou 10),
- des pignons planétaires (13) de l'engrenage planétaire (11) sont positionnés sur un support de pignon planétaire (14) relié de manière solidaire en rotation à l'autre arbre (10 ou 8),
- un pignon creux (15) de l'engrenage planétaire (11) pour régler une position de rotation relative entre les deux arbres (8,10) peut être fixé au moyen d'un servomoteur (16) et peut être actionné rotativement.

9. Moteur à combustion interne selon une des revendications 1 à 8,
**caractérisé en ce que**
deux organes de soupape (3) sont prévus, qui sont reliés de manière solidaire en rotation avec le même arbre d'organe de soupape (10), dans lequel notamment les deux organes de soupape (3) peuvent être disposés en étant décalés relativement l'un à l'autre sur l'arbre d'organe de soupape (10) commun .

10. Moteur à combustion interne selon une des revendications 1 à 8,
**caractérisé en ce que**
- deux organes de soupape (3) sont prévus,
- le groupe propulseur (5) présente deux arbres d'organe de soupape (10, 10') séparés, qui sont respectivement reliés de manière solidaire en rotation avec un des organes de soupape (3),
- le groupe propulseur (5) présente un gradateur de phase (11') supplémentaire pour le couplage en entraînement des deux arbres d'organe de soupape (10,10').

11. Moteur à combustion interne selon la revendication 10,
**caractérisé en ce que**
- le gradateur de phase supplémentaire est conçu comme un engrenage additionnel (11), et/ou
- le gradateur de phase supplémentaire est conçu comme un engrenage planétaire (11'), dont le pignon solaire (12) est relié de manière solidaire en rotation avec un des arbres d'organe de soupape (10 ou 10'), dont les pignons planétaires (13) sont positionnés sur un support de pignon planétaire (14) relié de manière solidaire en rotation avec l'autre arbre d'organe de soupape (10 ou 10') et dont le pignon creux (15) pour régler une position de rotation relative entre les deux organes de soupape (3) peut être fixé au moyen d'un servomoteur (16) et peut être actionné rotativement.

12. Moteur à combustion interne selon une des revendications 1 à 11,
**caractérisé en ce que**
un ressort de rappel élastique (21) est coordonné au gradateur de phase respectif (11,11'), qui entraîne le gradateur de phase respectif (11,11') pour régler une position de rotation de sortie ente les arbres (8, 10, 10').

13. Moteur à combustion interne selon une des revendications 1 à 12,
**caractérisé en ce que**
au moins un capteur (20) est prévu pour déterminer une position de rotation d'au moins un organe de soupape (3) .

14. Moteur à combustion interne selon une des revendications 1 à 13,
**caractérisé en ce que**
au moins une portion de canal (4) est prévue, dans laquelle l'organe de soupape respectif (3) est disposé de manière déplaçable rotativement et qui peut être montée dans le canal.
